# EUROPEAN PATENT SPECIFICATION

(11) **EP 3 241 723 B1**
(45) Date of publication and mention of the grant of the patent: **20.03.2019**
(21) Application number: 17164933.8
(22) Date of filing: 05.04.2017
(51) Int. Cl.: B62D 13/04, B62D 7/14

(54) **TRAILER WITH INDEPENDENTLY SUSPENDED WHEELS WITH A STEERING WITH A CONSTANT TOE-IN AND TOE-OUT ANGLE**
ANHÄNGER MIT UNABHÄNGIG AUFGEHÄNGTEN RÄDERN MIT EINER LENKUNG MIT EINEM KONSTANTEN VORSPUR- UND NACHSPURWINKEL
REMORQUE COMPORTANT DES ROUES SUSPENDUES INDÉPENDAMMENT AVEC UNE DIRECTION AYANT UN ANGLE D'OUVERTURE ET DE PINCEMENT CONSTANT

(30) Priority: 07.04.2016 NL 2016565
(43) Date of publication of application: 08.11.2017
(73) Proprietor: Broshuis B.V., 8263 AD Kampen (NL)
(72) Inventor: BROSHUIS, Baltasar Johannes Petrus, 8263 AD Kampen (NL)
(74) Representative: Van Breda, Jacobus

(56) References cited:
- EP-A1- 3 061 670
- EP-A2- 1 985 474
- US-A1- 2013 181 425

## Description

Semitrailer, with a vertical symmetry plane located in a longitudinal direction and which is arranged for coupling with a tractor and provided with at least one axle, whereby each of the at least one axles is equipped with an independent wheel suspension, whereby the wheel suspension connects a wheel hub with a central chassis beam of the semitrailer by two supporting arms laying above each other, whereby each supporting arm is connected hingeably by an end to the central chassis beam at two positions differing in the longitudinal direction from each other and at the other, opposite end hingeably connected with a strut which is connected with the wheel hub, whereby the wheel suspension connects the wheel hub with the central cassis beam movably in at least vertical direction, whereby of the semitrailer at least one axle is steerable by means of a steering which in operation is dependent on an angle between a longitudinal axis of the tractor and a longitudinal axis of the semitrailer, whereby the steering for each wheel hub is provided with a steering rod, which at one end is hingeably connected with an actuator and at the other, opposite end hingeably is connected with the wheel hub.

Semitrailers with an independent wheel suspension and at least one steerable axle, as described in the introduction, are known, for example from European patent application publication EP 1985474 A2, which document discloses the features of the preamble of claim 1.

Such known semitrailers have the disadvantage though, that the degree of toe-in or toe-out changes with the changing of the ride-height. This is disadvantageous because it influences the stability at the semitrailer during driving and for example with changing loads and thereby changing ride-heights.

It is a goal of the present invention to provide a semitrailer of the aforementioned type whereby the steering of the wheels does not or hardly influence the degree of toe-in or toe-out.

This goal is achieved by a semitrailer according to claim 1. In this semitrailer with a steering according to the invention, because the hinge point between steering rod and the actuator lies seen in top view between the hinge points of the central beam with the top and bottom support arm, the steering rod will be able to follow the movement of the wheel hub very well when changing the ride-height, because the degree of toe-in or toe-out will not or hardly be changed by the movement of the steering rod. This has favourable effects on the stability and thereby the safety of the semitrailer.

In a favourable embodiment of the invention, the steering for each steering rod/wheel hub is provided with a separate actuator. To obtain in a simple manner desired double implementation of the steering it is advantageous when for each axle both actuators are mutually coupled.

The invention will now be further elucidated with reference to the drawing in which:
- Fig. 1: shows a steering in bottom view of five axles of a semitrailer according to the state of the art; and
- Fig. 2: shows a steering in bottom view of four axles of a semitrailer according to a first embodiment of the invention.

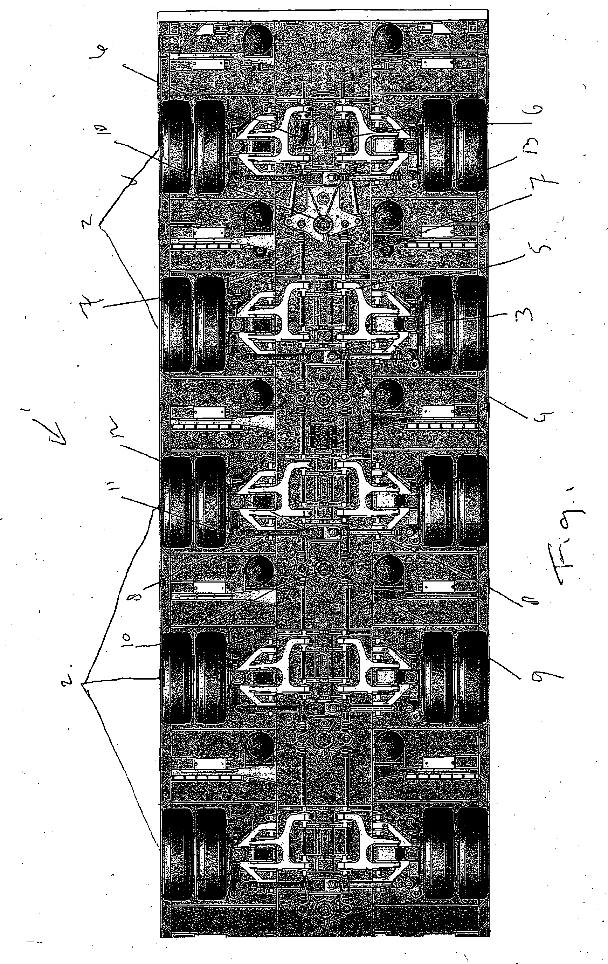

For the sake of clarity of the figure not all elements in the drawing are provided with corresponding reference numbers. For example parts that appear at all axles are often in only one instance provided with reference numbers. Figure 1 shows a bottom view of the first five axes of a semitrailer with independent wheel suspension and a steering for these axles in accordance with the state of the art. The semitrailer is generally indicated with reference number 1. The axles are schematically indicated with reference number 2. Each axle is provided with two times two wheels. The steering is duplicated so that at the area of the first axle two steering cylinders 6 are indicated which are controlled depending on the angle that the longitudinal axle of the trailer makes with the longitudinal axle of a tractor, the so-called steering angle. The steering is duplicated, i.e. each of the cylinders 6 is capable of operating the steering of the axles 2 of the semitrailer 1. To each cylinder 6 belongs a piston with a piston rod which terminates in an actuator with a hinge point 13. The actuator transfers movement of the piston to a longitudinal movement of each of the driving rods 7 of the steering. At each axle 2 an actuator 9 is located which is connected with both driving rods 7 for the steering. Actuator 9 is rotatable around a stationary point 10. When one of the steering cylinders is powered this movement is transferred to the first actuator via the piston rod. This movement is converted by the actuator into a movement in the longitudinal direction of both driving rods 7, and this in mutually opposite direction. These driving rods 7 in turn make the actuators of the other axles move around their stationary point such that the longitudinal movement of the driving rods is converted into a movement in the transverse direction of the steering rods 8 which are hingeably connected with both the actuator at hinge point 12 as well as the wheel hub 3 of the respective wheelset at hinge point 11. In this manner the steering of each of the axles is powered. Through a suitable dimensioning of the respective actuator a larger or smaller steering angle can be set for the respective axle. Such a steering is part of the state of the art. However this steering has a disadvantage that upon jouncing or rebounding or in any case upon the changing of the ride-height the degree of toe-in or toe-out of the respective axle changes, and this dependent on the ride-height.

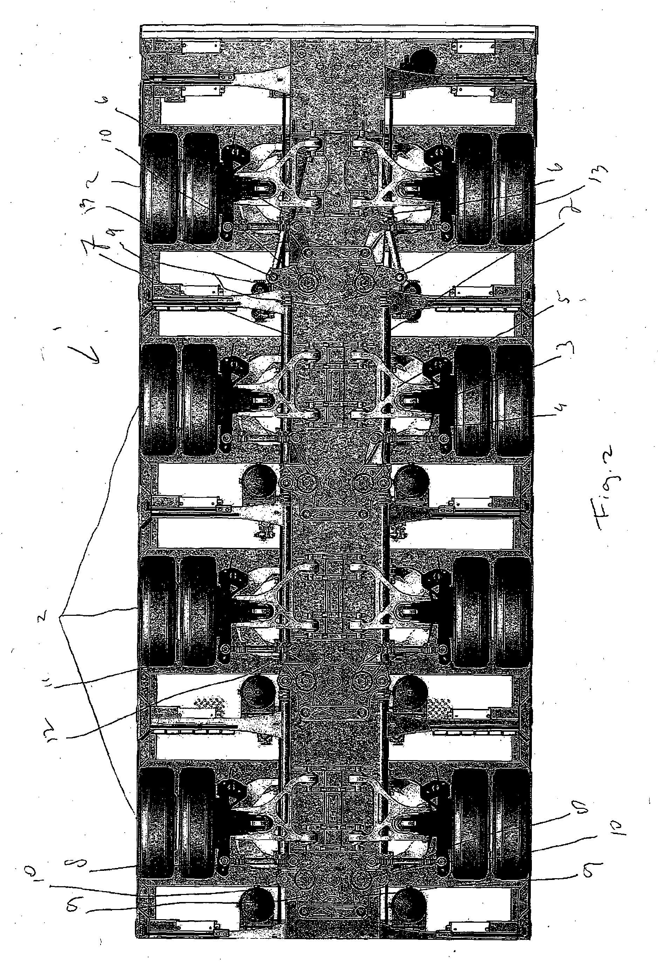

Figure 2 likewise shows a bottom view of in this case the first four axles of a semitrailer with a steering of these axles according to the invention. As in Figure 1, the steering is duplicated here by means of two steering cylinders 6. At each of the steering cylinders 6 a piston moves and therewith a piston rod depending on the steering angle between semitrailer and a tractor coupled thereto. In this instance each piston rod is connected with a separate actuator 9. One of these actuators transfers a movement of the piston rod via hinge point 13 to a longitudinal movement of a driving rod 7 belonging to the actuator, for operating either the wheels at the left side of the axle 2 of the semitrailer 1, or at the right side of each axle of the semitrailer. At each of the following axles 2 both the left and the right driving rod 7 are each connected to a separate actuator 9 for the steering. Each of the actuators 9 is rotatable around an own stationary point 10 and in this manner converts a back and forth going movement in the longitudinal direction of the driving rods 7 of the steering in to a back and forth going movement in the transversal direction of the associated steering rods 8. However, because the hinge point 12 between steering rod 8 and actuator 9, seen from above (or below), lies between the hinge points 16 of the bottom support arm 5 with the central beam and the hinge points 15 of the top support arm 4 with the central beam, a jouncing or rebounding or more generally a change in ride-height and the up-and-down going movement of the hinge point of the steering rod with the wheel hub 11 going hand in hand therewith, does not or hardly influence the degree of toe-in or toe-out of the respective wheel set located on this wheel hub. Hereby a steering is created according to the invention which does not or barely influence a degree of toe-in or toe-out upon jouncing or rebounding or changing the ride-height of the respective wheels mounted on this hub 3.

Finally, it should be noted that of one axle both the actuators 9 are hingeably coupled to each other by a coupling piece 14 so that, if one of the both steering cylinders 6 fails, the other steering cylinder 6 can transfer its movement to the driving rod of the steering of the failing cylinder as well.

### Reference numbers

- 1: semitrailer
- 2: axle
- 3: wheel hub
- 4: top support arm
- 5: bottom support arm
- 6: steering cylinder
- 7: driving rod steering
- 8: steering rods
- 9: actuator
- 10: stationary point actuator
- 11: hinge point steering rod wheel hub
- 12: hinge point steering rod actuator
- 13: hinge point front actuator piston rod steering cylinder
- 14: coupling piece
- 15: hinge points top support arm - central chassis beam
- 16: hinge points bottom support arm - central chassis beam

## Claims

1. Semitrailer (1), with a vertical symmetry plane located in a longitudinal direction and which is arranged for coupling with a tractor and is provided with at least one axle (2), whereby each of the at least one axles (2) is equipped with an independent wheel suspension, whereby the wheel suspension connects a wheel hub (3) with a central chassis beam of the semitrailer by two support arms (4, 5) laying above each other, whereby each support arm (4, 5) is connected hingeably by an end to the central chassis beam at two positions differing in the longitudinal direction from each other (15, 16) and by the other, opposite, end is hingeably connected with a strut which is connected to the wheel hub (3), whereby the wheel suspension connects the wheel hub (3) movably at least in vertical direction with the central chassis beam, whereby of the semitrailer at least one axle (2) is steerable by means of a steering which in operation is dependent on an angle between a longitudinal axis of the tractor and the longitudinal axis of the semitrailer (1), whereby the steering of each wheel hub (3) is provided with a steering rod (8), which at one end (12) is hingeably connected to an actuator (9) and at the other, opposite end (11) is hingeably connected to the wheel hub (3), **characterised in that** the shortest distance from the hinge point (12) between the steering rod (8) and the actuator (9) to the symmetry plane lies between the shortest distance of the hinge points (15) of the central chassis beam with the respective top support arm (4) to the symmetry plane and the shortest distance of the hinge points (16) of the respective bottom support arm (5) to the symmetry plane.

2. Semitrailer (1) according to claim 1, **characterised in that** the steering for each steering rod (8)/wheel hub (3) is provided with a separate actuator (9).

3. Semitrailer (1) according to claim 2, **characterised in that** the actuators of the same axle are mutually coupled by a coupling (14).

4. Semitrailer according to claims 2 or 3, wherein each of said actuators (9) is rotatable around a fixed own point (10) for converting a back-and-forth going movement of a driving rod (7), in longitudinal direction thereof, in a back-and-forth going movement, in transversal direction, of the steering rod (8).

5. Semitrailer according to one or more of the preceding claims, comprising a duplicated steering of the axles (2).

6. Semitrailer according to claim 5, wherein the steering is duplicated by means of two steering cylinders (6).

7. Semitrailer according to claim 6, wherein each of the two steering cylinders (6) moves a piston, and therewith a piston rod, depending on the steering angle between the semitrailer and a tractor coupled therewith.

8. Semitrailer according to claims 6 or 7, wherein each of the steering cylinders (6) is connected to a separate actuator (9).

9. Semitrailer according to claims 7 and 8, wherein the separate actuator (9) transfers a movement of the piston rod via a hinge point (13) to a longitudinal movement of a driving rod (7) belonging to the actuator, for operating either wheels at a left-side of the axle (2) or at a right side of the axle (2).

10. Semitrailer according to one or more of the preceding claims, at each side of the symmetry plane comprising a respective driving rod (7).

11. Semitrailer according to claims 9 and 10, wherein the driving rods (7) at the respective side are each connected to a separate actuator (9) for the following of said axles (2).

12. Semitrailer according to one or more of the preceding claims, comprising at each side of the symmetry plane a set of actuators (9), each set comprising an actuator (9) for each of said axles (2) for operating at the respective side the wheel hub of the axle (2).

13. Semitrailer according to any one of the preceding claims, wherein the steering has a constant toe-in and toe-out angle.

## Patentansprüche

1. Auflieger (1), mit einer in Längsrichtung liegenden vertikalen Symmetrieebene, die zum Ankuppeln an ein Zugfahrzeug angeordnet und mit mindestens einer Achse (2) versehen ist, wobei jede der mindestens einen Achsen (2) mit einer Einzelradaufhängung ausgestattet ist, wobei die Radaufhängung eine Radnabe (3) mit einem zentralen Fahrwerksträger des Aufliegers durch zwei übereinanderliegende Tragarme (4, 5) verbindet, wobei jeder Tragarm (4, 5) durch ein Ende mit dem zentralen Fahrwerksträger an zwei in Längsrichtung voneinander abweichenden Positionen (15, 16) und durch das andere, gegenüberliegende Ende mit einer Strebe, die mit der Radnabe (3) verbunden ist, gelenkig verbunden ist, wobei die Radaufhängung die Radnabe (3) zumindest in vertikaler Richtung beweglich mit dem zentralen Fahrwerksträger verbindet, wobei von dem Auflieger mindestens eine Achse (2) mittels einer Lenkung lenkbar ist, die im Betrieb von einem Winkel zwischen einer Längsachse des Zugfahrzeugs und der Längsachse des Aufliegers (1) abhängt, wobei die Lenkung jeder Radnabe (3) mit einer Lenkstange (8) versehen ist, die an einem Ende (12) schwenkbar mit einem Stellglied (9) und am anderen, gegenüberliegenden Ende (11) schwenkbar mit der Radnabe (3) verbunden ist, **dadurch gekennzeichnet, dass** der kürzeste Abstand vom Scharnierpunkt (12) zwischen der Lenkstange (8) und dem Stellglied (9) zur Symmetrieebene zwischen dem kürzesten Abstand der Scharnierpunkte (15) des mittleren Fahrwerksträgers mit dem jeweiligen oberen Tragarm (4) zur Symmetrieebene und dem kürzesten Abstand der Scharnierpunkte (16) des jeweiligen unteren Tragarms (5) zur Symmetrieebene liegt.

2. Auflieger (1) nach Anspruch 1, **dadurch gekennzeichnet, dass** die Lenkung für jede Lenkstange (8) / Radnabe (3) mit einem separaten Stellglied (9) versehen ist.

3. Auflieger (1) nach Anspruch 2, **dadurch gekennzeichnet, dass** die Stellglieder derselben Achse durch eine Kupplung (14) miteinander gekoppelt sind.

4. Auflieger nach den Ansprüchen 2 oder 3, wobei jedes der Stellglieder (9) um einen festen eigenen Punkt (10) drehbar ist, um eine Hin- und Herbewegung einer Antriebsstange (7) in deren Längsrichtung in eine Hin- und Herbewegung der Antriebsstange (8) in Querrichtung umzuwandeln.

5. Auflieger nach einem oder mehreren der vorstehenden Ansprüche, umfassend eine doppelte Lenkung der Achsen (2) .

6. Auflieger nach Anspruch 5, wobei die Lenkung mittels zweier Lenkzylinder (6) dupliziert wird.

7. Auflieger nach Anspruch 6, wobei jeder der beiden Lenkzylinder (6) abhängig vom Lenkwinkel zwischen dem Auflieger und einem damit gekoppelten Zugfahrzeug einen Kolben, und mit diesem eine Kolbenstange, bewegt.

8. Auflieger nach Anspruch 6 oder 7, wobei jeder der Lenkzylinder (6) mit einem separaten Stellglied (9) verbunden ist.

9. Auflieger nach den Ansprüchen 7 und 8, wobei das separate Stellglied (9) eine Bewegung der Kolbenstange über einen Gelenkpunkt (13) auf eine Längsbewegung einer zum Stellglied gehörenden Antriebsstange (7) überträgt, um entweder Räder an einer linken Seite der Achse (2) oder an einer rechten Seite der Achse (2) zu betätigen.

10. Auflieger nach einem oder mehreren der vorstehenden Ansprüche, auf jeder Seite der Symmetrieebene eine entsprechende Antriebsstange (7) umfassend.

11. Auflieger nach den Ansprüchen 9 und 10, wobei die Antriebsstangen (7) auf der jeweiligen Seite jeweils mit einem separaten Stellglied (9) für das Folgen der Achsen (2) verbunden sind.

12. Auflieger nach einem oder mehreren der vorstehenden Ansprüche, welcher auf jeder Seite der Symmetrieebene einen Satz von Stellgliedern (9) umfasst, wobei jeder Satz ein Stellglied (9) für jede der Achsen (2) umfasst, um auf der jeweiligen Seite die Radnabe der Achse (2) zu betätigen.

13. Auflieger nach einem der vorstehenden Ansprüche, wobei die Lenkung einen konstanten Vorspur- und Nachspurwinkel aufweist.

## Revendications

1. Semi-remorque (1) avec un plan symétrie vertical positionné dans une direction longitudinale et qui est agencée pour se coupler avec un tracteur et est prévue avec au moins un essieu (2), moyennant quoi chacun de l'au moins un essieu (2) est équipé avec une suspension de roue indépendante, moyennant quoi la suspension de roue raccorde un moyeu de roue (3) avec une poutre de châssis centrale de la semi-remorque par deux bras de support (4, 5) positionnés l'un au-dessus de l'autre, moyennant quoi chaque bras de support (4, 5) est raccordé, par charnière, par une extrémité à la poutre de châssis centrale dans deux positions différant, dans la direction longitudinale, l'une de l'autre (15, 16) et par l'autre extrémité opposée est raccordé, par charnière, avec une entretoise qui est raccordée au moyeu de roue (3), moyennant quoi la suspension de roue raccorde le moyeu de roue (3) de manière mobile au moins dans la direction verticale avec la poutre de châssis centrale, moyennant quoi au moins un essieu (2) de la semi-remorque peut être orienté au moyen d'une direction qui, en fonctionnement, dépend d'un angle entre l'axe longitudinal du tracteur et l'axe longitudinal de la semi-remorque (1), moyennant quoi la direction de chaque moyeu de roue (3) est fournie avec une tige de direction (8) qui, à une extrémité (12), est raccordée, par charnière, à un actionneur (9) et à l'autre extrémité opposée (11) est raccordée, par charnière, au moyeu de roue (3), **caractérisée en ce que** la plus courte distance allant du point d'articulation (12) entre la tige de direction (8) et l'actionneur (9) jusqu'au plan de symétrie se situe entre la distance la plus courte des points d'articulation (15) de la poutre de châssis centrale avec le bras de support supérieur (4) respectif jusqu'au plan de symétrie et la plus courte distance des points d'articulation (16) du bras de support inférieur (5) respectif jusqu'au plan de symétrie.

2. Semi-remorque (1) selon la revendication 1, **caractérisée en ce que** la direction pour chaque tige de direction (8)/moyeu de roue (3) est fournie avec un actionneur (9) séparé.

3. Semi-remorque (1) selon la revendication 2, **caractérisée en ce que** les actionneurs du même essieu sont mutuellement couplés par un couplage (14).

4. Semi-remorque selon les revendications 2 ou 3, dans laquelle chacun desdits actionneurs (9) peut tourner autour de son propre point fixe (10) pour transformer un mouvement d'avant vers l'arrière de la tige d'entraînement (7), dans sa direction longitudinale, en un mouvement d'avant vers l'arrière dans la direction transversale de la tige de direction (8).

5. Semi-remorque selon une ou plusieurs des revendications précédentes, comprenant une double direction des essieux (2).

6. Semi-remorque selon la revendication 5, dans laquelle la direction est dupliquée au moyen de deux vérins d'orientation (6).

7. Semi-remorque selon la revendication 6, dans laquelle chacun des deux vérins d'orientation (6) déplace un piston, et avec ce dernier une tige de piston, dépendant de l'angle de direction entre la semi-remorque et un tracteur couplé avec cette dernière.

8. Semi-remorque selon les revendications 6 ou 7, dans laquelle chacun des vérins d'orientation (6) est raccordé à un actionneur (9) séparé.

9. Semi-remorque selon les revendications 7 et 8, dans laquelle l'actionneur (9) séparé transfère un mouvement de la tige de piston via un point d'articulation (13) en un mouvement longitudinal de la tige d'entraînement (7) appartenant à l'actionneur, pour actionner chaque roue du côté gauche de l'essieu (2) ou du côté droit de l'essieu (2).

10. Semi-remorque selon une ou plusieurs des revendications précédentes, comprenant une tige d'entraînement (7) respective de chaque côté du plan de symétrie.

11. Semi-remorque selon les revendications 9 et 10, dans laquelle les tiges d'entraînement (7) du côté respectif sont chacune raccordées à un actionneur (9) séparé pour la partie suivante des essieux (2).

12. Semi-remorque selon une ou plusieurs des revendications précédentes, comprenant de chaque côté du plan de symétrie, un ensemble d'actionneurs (9), chaque ensemble comprenant un actionneur (9) pour chacun desdits essieux (2) afin de faire fonctionner, du côté respectif, le moyeu de roue de l'essieu (2).

13. Semi-remorque selon l'une quelconque des revendications précédentes, dans laquelle la direction a un angle d'ouverture et de pincement constant.
